(19) Europäisches Patentamt / European Patent Office / Office européen des brevets

(11) EP 4 039 500 A1

(12) **EUROPEAN PATENT APPLICATION**
published in accordance with Art. 153(4) EPC

(43) Date of publication:
**10.08.2022 Bulletin 2022/32**

(21) Application number: **20871341.2**

(22) Date of filing: **29.09.2020**

(51) International Patent Classification (IPC):
***B60C 1/00*** (2006.01) ***B62D 55/24*** (2006.01)
***C08K 5/098*** (2006.01) ***C08K 5/25*** (2006.01)
***C08K 5/3415*** (2006.01) ***C08K 5/41*** (2006.01)
***C08L 21/00*** (2006.01) ***C08K 3/04*** (2006.01)
***C08K 3/36*** (2006.01) ***F16L 11/04*** (2006.01)

(52) Cooperative Patent Classification (CPC):
**B60C 1/00; B62D 55/24; C08K 3/04; C08K 3/36; C08K 5/098; C08K 5/25; C08K 5/3415; C08K 5/41; C08L 21/00; F16L 11/04**

(86) International application number:
**PCT/JP2020/036976**

(87) International publication number:
**WO 2021/065931 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 JP 2019181067**

(71) Applicant: **BRIDGESTONE CORPORATION**
**Chuo-ku**
**Tokyo 104-8340 (JP)**

(72) Inventors:
- **KANEDA, Kazunori**
**Tokyo 104-8340 (JP)**
- **KANATOMI, Yoshihiko**
**Tokyo 104-8340 (JP)**
- **YAMAGISHI, Junichi**
**Tokyo 104-8340 (JP)**

(74) Representative: **Oxley, Robin John George**
**Marks & Clerk LLP**
**15 Fetter Lane**
**London EC4A 1BW (GB)**

# (54) RUBBER COMPOSITION, RUBBER/METAL COMPOSITE, TIRE, CONVEYOR BELT, HOSE, AND CRAWLER

(57) Provided are: a rubber composition that gives a vulcanized rubber having a high elastic modulus and excellent in rubber/metal adhesion, a rubber/metal composite excellent in durability and rubber/metal adhesion, as well as a tire, a conveyor belt, a hose and a crawler excellent in durability. The rubber composition contains a rubber component, a rubber/metal adhesion accelerator containing at least one selected from the group consisting of (1) a metal carboxylate which has 2 to 25 carbon atoms and in which the metal species is selected from the group consisting of bismuth, copper, antimony, silver, niobium and zirconium and (2) a compound represented by the formula (A), and 4,4'-diphenylmethanebismaleimide.

EP 4 039 500 A1

## Description

### Technical Field

The present invention relates to a rubber composition, a rubber/metal composite, a tire, a conveyor belt, a hose, and a crawler.

### Background Art

Due to environmental regulations in recent years, studies on substances in place of cobalt salts (e.g., cobalt stearate, cobalt versatate), which are commonly used as accelerators for rubber-metal adhesion, have been in dire need.

For example, a rubber-metal adhesion accelerator containing (1) a metal salt of an aliphatic carboxylic acid having 2 to 25 carbon atoms where the metal is bismuth, copper, antimony, silver or niobium, or (2) a compound represented by the following general formula (A), where Z is a structure selected from the following formulae (z-1) to (z-4), M is bismuth, copper, antimony, silver or niobium, (RCOO) is a residue of an aliphatic carboxylic acid having 2 to 25 carbon atoms, and x is (valency of M - 1), is disclosed (for example, see PTL 1).

An organic metal compound of an average formula: X(OMA'p)m(OMB'p)n, where M is cobalt, nickel or bismuth, B' is a residue of an aromatic carboxylic acid having 7 to 11 carbon atoms, A' is a residue of an aliphatic carboxylic acid having 7 to 11 carbon atoms, p is 1 when M is cobalt or nickel, or is 2 when M is bismuth, n is 0.5 to 2, and m is (3-n), is disclosed (for example, see PTL 2).

A method of increasing the viscosity of an aqueous medium containing a gellable polymer substance having a phenolic hydroxy group-having substituent or gelling the aqueous medium, where an effective amount of a laccase is added to the aqueous medium, is disclosed (for example, see PTL 3).

Also disclosed is a steel cord/rubber composite (for example see PTL 4) in which a rubber and steel cord having one or more steel filaments coated with a plating layer containing copper, zinc and cobalt are bonded, wherein the rubber and the plating layer are bonded to each other, and sum of a cobalt-rich regions (nm) at six points is more than 40% of sum of a analytical area at the six points when a layer of the plating layer where a compound of copper and sulfur exists is defined as an adhesive layer, the sulfur content in the adhesive layer is analyzed in the vertical direction relative to the longitudinal direction of the steel filament from the plating layer to the rubber, the position of the inflection point at which the sulfur content increases is defined as a lowermost part of the adhesive layer, the cobalt content in atomic percent is analyzed from the lowermost part of the adhesive layer to a distance of 100 nm inward perpendicularly to the longitudinal direction of the steel filament at the six points located at equal intervals along the longitudinal direction of the steel filament, and the an areas having a cobalt content in atomic percent higher than the cobalt content in atomic percent of the whole plating layer is regarded as a cobalt-rich region (nm).

### Citation List

#### Patent Literature

PTL 1: WO2016/039375
PTL 2: JP 1992-230397 A
PTL 3: JP 1998-502962 T
PTL 4: WO2016/203886

### Summary of Invention

#### Technical Problem

The bismuth salts and other described in PTLs 1 to 4 can attain rubber/metal adhesion but lower the elastic modulus of vulcanized rubber, and therefore there are many problems to be solved for satisfying both rubber/metal adhesion and durability of vulcanized rubber.

In consideration of the above-mentioned situation, an object of the present invention is to provide a rubber composition that gives a vulcanized rubber having a high elastic modulus and excellent in rubber/metal adhesion, to provide a rubber/metal composite excellent in durability and rubber/metal adhesion, and to provide a tire, a conveyor belt, a hose and a crawler excellent in durability, and the invention is to solve the above-mentioned problems to attain the object.

Solution to Problem

<1> A rubber composition containing a rubber component, a rubber/metal adhesion accelerator containing at least one selected from the group consisting of (1) a metal carboxylate which has 2 to 25 carbon atoms and in which the metal species is selected from the group consisting of bismuth, copper, antimony, silver, niobium and zirconium and (2) a compound represented by the following formula (A), and 4,4'-diphenylmethanebismaleimide.

$$[(RCOO)_xMO]_3Z \qquad (A)$$

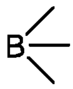 (z-1) 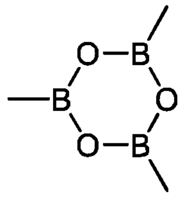 (z-2)

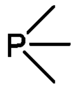 (z-3) 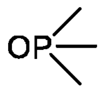 (z-4)

In the formula (A), Z is a structure selected from the formulae (z-1) to (z-4), M is bismuth, copper, antimony, silver, niobium or zirconium, (RCOO) is a residue of an aliphatic carboxylic acid having 2 to 25 carbon atoms, and x is an integer of (valency of M - 1).

<2> The rubber composition according to <1>, further containing at least one selected from the group consisting of hexamethylenebisthiosulfate disodium dihydrate, 1,3-bis(citraconimidemethyl)benzene, and 3-hydroxy-N'-(1,3-dimethylbutylidene)-2-naphthoic acid hydrazide.

<3> The rubber composition according to <1> or <2>, containing a filler that contains at least one selected from the group consisting of carbon black and silica.

<4> The rubber composition according to any one of <1> to <3>, wherein the rubber component contains a natural rubber.

<5> The rubber composition according to any one of <1> to <4>, wherein the rubber/metal adhesion accelerator contains the metal carboxylate (1) and the metal species of the metal carboxylate (1) is bismuth or copper.

<6> The rubber composition according to any one of <1> to <5>, wherein the rubber/metal adhesion accelerator contains the metal carboxylate (1) and the aliphatic carboxylic acid in the metal carboxylate (1) is an aliphatic monocarboxylic acid or an aliphatic dicarboxylic acid.

<7> The rubber composition according to <6>, wherein the aliphatic monocarboxylic acid is a saturated aliphatic monocarboxylic acid having 2 to 20 carbon atoms.

<8> The rubber composition according to <7>, wherein the saturated aliphatic monocarboxylic acid having 2 to 20 carbon atoms is 2-ethylhexanoic acid, neodecanoic acid, hexadecenoic acid or octadecanoic acid.

<9> The rubber composition according to any one of <1> to <8>, wherein the rubber/metal adhesion accelerator contains the compound (2) and M in the compound (2) is bismuth or copper.

<10> The rubber composition according to any one of <1> to <9>, wherein the rubber/metal adhesion accelerator contains the compound (2) and Z in the compound (2) is a structure represented by the formula (z-1).

<11> The rubber composition according to any one of <1> to <10>, wherein the rubber/metal adhesion accelerator contains the compound (2) and (RCOO) in the compound (2) is a residue of a saturated aliphatic monocarboxylic acid having 2 to 20 carbon atoms.

<12> The rubber composition according to <11>, wherein (RCOO) in the compound (2) is a residue of 2-ethylhexanoic acid, a residue of neodecanoic acid, a residue of hexadecenoic acid or a residue of octadecanoic acid.

<13> A rubber/metal composite containing a vulcanized rubber of the rubber composition of any one of <1> to <12> and a metal.

<14> A tire containing the rubber/metal composite of <13>.

<15> A conveyor belt containing the rubber/metal composite of <13>.

<16> A hose containing the rubber/metal composite of <13>.

<17> A crawler containing the rubber/metal composite of <13>.

Advantageous Effects of Invention

According to the present invention, there can be provided a rubber composition that gives a vulcanized rubber having a high elastic modulus and excellent in rubber/metal adhesion, as well as a rubber/metal composite excellent in durability and rubber/metal adhesion, and a tire, a conveyor belt, a hose and a crawler excellent in durability.

Description of Embodiments

Hereinunder the present invention will be described in detail on the basis of embodiments thereof. In the following description, the numerical range expressed by "A to B" indicates a range that includes the numerical value A and the numerical B as the minimum value and the maximum value, and indicates "A or more and B or less" (in the case of A < B), or "A or less and B or more" (in the case of A > B).
Part by mass and % by mass are the same as part by weight and % by weight, respectively.

<Rubber Composition>

The rubber composition of the present invention contains a rubber component, a rubber/metal adhesion accelerator containing at least one selected from the group consisting of (1) a metal carboxylate which has 2 to 25 carbon atoms and in which the metal species is selected from the group consisting of bismuth, copper, antimony, silver, niobium and zirconium and (2) a compound represented by the following formula (A), and 4,4'-diphenylmethanebismaleimide.

$[(RCOO)_xMO]_3Z$ (A)

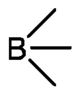 (z-1)

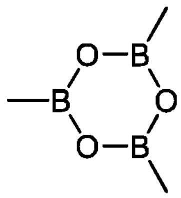 (z-2)

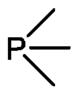 (z-3)

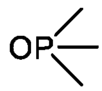 (z-4)

In the formula (A), Z is a structure selected from the formulae (z-1) to (z-4), M is bismuth, copper, antimony, silver, niobium or zirconium, (RCOO) is a residue of an aliphatic carboxylic acid having 2 to 25 carbon atoms, and x is an integer of (valency of M - 1).
When a compound containing a metal such as bismuth is used as an alternative to a cobalt-containing compound of an adhesive agent for rubber/metal adhesion, the elastic modulus of the vulcanized rubber lowers though the rubber/metal adhesion can be attained. As opposed to this, the rubber composition of the present invention having the above-mentioned constitution can provide a rubber composition that gives a vulcanized rubber having a high elastic modulus and excellent in rubber/metal adhesion, as well as a rubber/metal composite excellent in durability and rubber/metal adhesion, and a tire excellent in durability. The reason for this is not clear, but it is assumed that, by using the above-mentioned rubber/metal cohesion accelerator containing bismuth or the like and 4,4'-diphenylmethanebismaleimide, the elastic modulus of the vulcanized rubber can be complemented and can be therefore increased, and accordingly, the vulcanized rubber can be excellent in rubber/metal adhesion and the rubber/metal composite can be excellent in durability.
In particular, even when an unvulcanized rubber/metal composite (referred to as a rubber/metal composite precursor) is formed by use of the rubber composition of the present invention and the composite is vulcanized to be a rubber/metal composite after a lapse of time, the resultant rubber/metal composite can still prevent metal corrosion and can be excellent in rubber/metal adhesion and durability.
A treatment of bringing a rubber composition into contact with a metal followed by standing them as such for a predetermined time (for example, for 1 week) may be referred to as "uncured aging".
The rubber composition of the present invention can prevent metal corrosion after uncured aging, as compared with a rubber composition containing a cobalt-containing material. Accordingly, for example, in the case where a metal cord is covered with the rubber composition and after a lapse of specified time, the rubber composition is vulcanized to

produce a rubber/metal composite, reduction in the rubber/metal adhesiveness to be caused by metal corrosion can be prevented and the durability of the rubber/metal composite can also be prevented.

Hereinunder the rubber composition, the rubber/metal composite and the tire of the present invention are described in detail.

[Rubber Component]

The rubber composition of the present invention contains a rubber component.

The rubber component includes at least one diene rubber selected from a natural rubber (NR) and a synthetic diene rubber. The rubber component can be modified.

Specifically, the synthetic diene rubber includes a polyisoprene rubber (IR), a polybutadiene rubber (BR), a styrene-butadiene copolymer rubber (SBR), a butadiene-isoprene copolymer rubber (BIR), a styrene-isoprene copolymer rubber (SIR), a styrene-butadiene-isoprene copolymer rubber (SBIR), and modified rubbers thereof.

The diene rubber is, from the viewpoint of adhesiveness between metal and vulcanized rubber, preferably a natural rubber, a polyisoprene rubber, a styrene-butadiene copolymer rubber, a polybutadiene rubber, and an isobutylene-isoprene rubber, and modified rubbers thereof, more preferably a natural rubber, a polyisoprene rubber and a polybutadiene rubber, even more preferably a natural rubber and a polyisoprene rubber.

One alone or two or more kinds of diene rubbers can be used either singly or as blended.

From the viewpoint of increasing the adhesiveness between metal and vulcanized rubber and increasing the durability of the resultant rubber/metal composite, preferably, the rubber component contains a natural rubber in an amount of 55% by mass or more, more preferably 65% by mass or more, even more preferably 75% by mass or more. The upper limit of the natural rubber in the rubber component may be 100% by mass.

The rubber component is, from the viewpoint of increasing the adhesiveness between metal and vulcanized rubber and increasing the durability of the resultant rubber/metal composite, preferably, a combined use of a natural rubber (NR) and a polyisoprene rubber (IR), and the ratio of the two (mass of natural rubber/mass of polyisoprene rubber) is preferably 55/45 to 95/5, more preferably 65/35 to 93/17, even more preferably 70/30 to 90/10.

The rubber component may contain a non-diene rubber within a range not detracting from the advantageous effects of the present invention.

[Rubber/Metal Adhesion Accelerator]

The rubber composition of the present invention contains a rubber/metal adhesion accelerator containing at least one selected from the group consisting of (1) a metal carboxylate which has 2 to 25 carbon atoms and in which the metal species is selected from the group consisting of bismuth, copper, antimony, silver, niobium and zirconium and (2) a compound represented by the following formula (A).

$$[(RCOO)_xMO]_3Z \qquad (A)$$

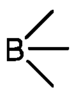 (z-1) 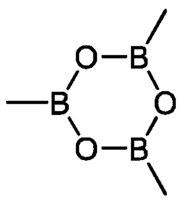 (z-2)

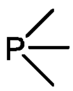 (z-3) 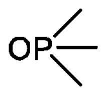 (z-4)

In the formula (A), Z is a structure selected from the formulae (z-1) to (z-4), M is bismuth, copper, antimony, silver, niobium or zirconium, (RCOO) is a residue of an aliphatic carboxylic acid having 2 to 25 carbon atoms, and x is an integer of (valency of M - 1).

The metal carboxylate (1) is a metal salt of an aliphatic carboxylic acid having 2 to 25 carbon atoms. Here, the metal species is bismuth, copper, antimony, silver, niobium or zirconium. Among the metal species, preferred is bismuth, copper, antimony or silver from the viewpoint that an adhesion accelerator enabling good adhesion between steel cords and rubber even in a wet heat condition can be provided, and more preferred is bismuth or copper.

When the carbon number of the metal carboxylate (1) is less than 2, the compatibility between the metal carboxylate (1) and the rubber component is poor ,and therefore a high adhesion force between vulcanized rubber and metal cannot be obtained. When the carbon number is more than 25, the metal carboxylate (1) is difficult to synthesize.

Examples of the aliphatic carboxylic acid having 2 to 25 carbon atoms include an aliphatic monocarboxylic acid and an aliphatic dicarboxylic acid. The carbon number of the aliphatic carboxylic acid is a number including the carbon number of the carboxy group.

Examples of the aliphatic carboxylic acid having 2 to 25 carbon atoms include a saturated aliphatic monocarboxylic acid and an unsaturated aliphatic monocarboxylic acid.

Examples of the saturated aliphatic monocarboxylic acid include ethanoic acid, propanoic acid, butanoic acid, pentanoic acid, hexanoic acid, 2-ethylhexanoic acid, heptanoic acid, octanoic acid, nonanoic acid, isononanoic acid, decanoic acid, neodecanoic acid, dodecanoic acid, tetradecanoic acid, hexadecanoic acid, heptadecanoic acid, octadecanoic acid, eicosanoic acid, docosanoic acid, tetracosanoic acid, and naphthenic acid.

Examples of the unsaturated aliphatic monocarboxylic acid include 9-hexadecenoic acid, cis-9-octadecenoic acid, 11-octadecenoic acid, cis, cis-9, 12-octadecadienoic acid, 9,12,15-octadecatrienoic acid, 6,9,12-octadecatrienoic acid, 9,11,13-octadecatrienoic acid, eicosanoic acid, 8,11-eicosadienoic acid, 5,8,11-eicosatrienoic acid, 5,8,11,14-eicosatetraenoic acid, tung oil acid, linseed oil acid, soybean oil acid, resin acid, tall oil fatty acid, rosin acid, abietic acid, neoabietic acid, palustric acid, pimaric acid, and dehydroabietic acid.

Examples of the aliphatic dicarboxylic acid having 2 to 25 carbon atoms include a saturated aliphatic dicarboxylic acid, and an unsaturated aliphatic dicarboxylic acid.

Examples of the saturated aliphatic dicarboxylic acid include oxalic acid, malonic acid, succinic acid, glutaric acid, and adipic acid.

Examples of the unsaturated aliphatic dicarboxylic acid include fumaric acid and maleic acid.

The aliphatic dicarboxylic acid having 2 to 25 carbon atoms is preferably an aliphatic monocarboxylic acid or an aliphatic dicarboxylic acid, more preferably an aliphatic monocarboxylic acid, even more preferably a saturated aliphatic monocarboxylic acid. Using a saturated aliphatic monocarboxylic acid can have little influence on sulfur crosslinking of rubber and can prevent deterioration of the rubber properties of vulcanized rubber.

Among the saturated fatty acid, preferred is a saturated aliphatic monocarboxylic acid having 2 to 20 carbon atoms, and more preferred are 2-ethylhexanoic acid, neodecanoic acid, hexadecanoic acid and octadecanoic acid.

The metal carboxylate (1) can be produced, for example, according to the following methods.

Production method 1: a production method (direct method) of direct reaction between (a) an aliphatic carboxylic acid having 2 to 25 carbon atoms, and one or more selected from (b-1) an oxide of a metal (bismuth, copper, antimony, silver, niobium, zirconium), (b-2) a hydroxide of a metal (bismuth, copper, antimony, silver, niobium, zirconium) and (b-3) a carbonate of a metal (bismuth, copper, antimony, silver, niobium, zirconium).

Production method 2: a production method (metathetical method)including reacting (a) an aliphatic carboxylic acid having 2 to 25 carbon atoms and sodium hydroxide in the presence of water to give a sodium aliphatic carboxylate, and then reacting the sodium aliphatic carboxylate with one or more selected from (c-1) a sulfate of a metal (bismuth, copper, antimony, silver, niobium, zirconium), (c-2) a chloride of a metal (bismuth, copper, antimony, silver, niobium, zirconium) and (c-3) a nitrate of a metal (bismuth, copper, antimony, silver, niobium, zirconium).

Examples of the oxide (b-1) of a metal (bismuth, copper, antimony, silver, niobium, zirconium) include bismuth(III) oxide, copper(I) oxide, copper (II) oxide, antimony(III) oxide, antimony(V) oxide, silver(I) oxide, silver(II) oxide, silver(III) oxide, niobium(IV) oxide, niobium(V) oxide, and zirconium oxide.

Examples of the hydroxide (b-2) of a metal (bismuth, copper, antimony, silver, niobium, zirconium) include copper(II) hydroxide, and zirconium hydroxide.

Examples of the carbonate (b-3) of a metal (bismuth, copper, antimony, silver, niobium, zirconium) include bismuth(III) carbonate, bismuth(III) carbonate oxide, and copper(II) carbonate.

Examples of the sulfate (c-1) of a metal (bismuth, copper, antimony, silver, niobium, zirconium) include copper(II) sulfate, and zirconium sulfate.

Examples of the chloride (c-2) of a metal (bismuth, copper, antimony, silver, niobium, zirconium) include bismuth(III) oxychloride, copper(I) chloride, copper(II) chloride, antimony(III) chloride, antimony(V) chloride, silver(I) chloride, and niobium(V) chloride.

Examples of the nitrate (c-3) of a metal (bismuth, copper, antimony, silver, niobium, zirconium) include bismuth(III) nitrate, bismuth(III) subnitrate, and silver(I) nitrate.

In the production method 1, the reaction temperature in reacting the aliphatic carboxylic acid (a) having 2 to 25 carbon atoms and the compound (b-1) to (b-3) is generally 50 to 150°C. The reaction time is generally 1 to 20 hours.

In the production method 2, the reaction temperature in reacting the aliphatic carboxylic acid (a) having 2 to 25 carbon atoms and sodium hydroxide in the presence of an organic solvent is generally 20 to 100°C. The reaction time is generally 1 to 5 hours.

In the production method 2, the reaction temperature in reacting the sodium aliphatic carboxylate and the

compound (c-1) to (c-3) is generally 20 to 100°C. The reaction time is generally 1 to 5 hours.

In the production method 2, after a sodium aliphatic carboxylate is reacted with a compound (c-1) to (c-3), the aqueous layer in the reaction system is separated. Subsequently, the solvent existing in the oily layer is removed by reduced pressure distillation to give a metal carboxylate (1).

Next, the compound (2) represented by the formula (A) is described in detail.

(RCOO) in the compound (2) is a residue of an aliphatic carboxylic acid having 2 to 25 carbon atoms. When the carbon number of the residue of an aliphatic carboxylic acid is less than 2, the compatibility between the rubber component and the compound (2) is poor and, as a result, the adhesion force between vulcanized rubber and metal lowers. When the carbon number of the residue of an aliphatic carboxylic acid is more than 25, the compound (2) is difficult to synthesize. In addition, if so, the compound (2) hardly disperses in the rubber component or vulcanized rubber hardly adsorbs to the surface of a steel cord and, as a result, the adhesion force between vulcanized rubber and metal lowers.

Examples of the residue of an aliphatic monocarboxylic acid having 2 to 25 carbon atoms include a residue of an aliphatic monocarboxylic acid, and preferred examples thereof are the aliphatic monocarboxylic acid-derived residues described for the metal carboxylate (1).

Among the residue of an aliphatic carboxylic acid, preferred is a residue of a saturated aliphatic monocarboxylic acid. Using a residue of a saturated aliphatic monocarboxylic acid facilitates easy dispersion of the compound (2) around steel cords or easy adsorption of vulcanized rubber to the surfaces of steel cords. Among the residue of a saturated aliphatic monocarboxylic acid, preferred is a residue of a saturated aliphatic monocarboxylic acid having 2 to 20 carbon atoms, and more preferred are a residue of 2-ethylhexanoic acid, a residue of neodecanoic acid, a residue of hexadecenoic acid, and a residue of octadecanoic acid.

M in the compound represented by the formula (A) is a metal species, and is concretely bismuth, copper, antimony, silver, niobium or zirconium. Among the metal species, from the viewpoint of giving an adhesion accelerator that betters adhesion between steel cords and rubber even in a wet heat condition, preferred is bismuth, copper, antimony and silver, and more preferred are bismuth and copper.

x in the compound (2) represented by the formula (A) is an integer of (valency of M - 1).

Z in the compound (2) represented by the formula (A) is a structure selected from the above-mentioned formulae (z-1) to (z-4).

Above all, from the viewpoint of readily giving an adhesion accelerator that exhibits a high adhesion force between vulcanized rubber and metal, the structure represented by the formula (z-1) is preferred.

The compound (2) represented by the formula (A) can be produced, for example, by mixing with heating an aliphatic carboxylic acid (a) having 2 to 25 carbon atoms, an inorganic acid ester (d), an acid (e) and a metal compound M (f), followed by removing the resultant volatile ester (g).

The aliphatic carboxylic acid (a) having 2 to 25 carbon atoms includes the above-mentioned aliphatic monocarboxylic acid having 2 to 25 carbon atoms.

The inorganic acid ester (d) includes (d-1) a borate ester of a lower alcohol having 1 to 5 carbon atoms, (d-2) a metaborate ester of a lower alcohol having 1 to 5 carbon atoms, (d-3) a phosphate ester of a lower alcohol having 1 to 5 carbon atoms, and (d-4) a phosphite ester of a lower alcohol having 1 to 5 carbon atoms.

Examples of the borate ester of a lower alcohol (d-1) include trimethyl borate, triethyl borate, tripropyl borate and tributyl borate.

Examples of the metaborate ester (d-2) of a lower alcohol include trimethyl metaborate, triethyl metaborate, tripropyl metaborate, and tributyl metaborate.

Examples of the phosphate ester (d-3) of a lower alcohol include methyl phosphate, ethyl phosphate, propyl phosphate, and butyl phosphate.

Examples of the phosphite ester (d-4) of a lower alcohol include methyl phosphite, ethyl phosphite, propyl phosphite, and butyl phosphite.

Among the above, from the viewpoint of preventing metal corrosion after uncured aging, preferred is the metaborate ester (d-2) of a lower alcohol.

The acid (e) is an acid capable of forming a volatile ester (g) with the lower alcohol residue having 1 to 5 carbon atoms existing in the inorganic acid ester (d). Specifically, examples thereof include ethanoic acid, propanoic acid and butanoic acid.

The metal compound M (f) is a metal source for the compound (2), and examples thereof usable here include the oxide (b-1), the hydroxide (b-2) and the carbonate (b-3) described hereinabove for the production method of the metal carboxylate (1).

The use ratio of the metal compound M (f) as a metal source is, for example, 20 to 100 parts by mass relative to 100 parts by mass of the aliphatic carboxylic acid (a) having 2 to 25 carbon atoms.

The use ratio of the inorganic acid ester (d) is, for example, 10 to 50 parts by mass relative to 100 parts by mass of the aliphatic carboxylic acid (a) having 2 to 25 carbon atoms.

The use ratio of the acid (e) is, for example, 10 to 50 parts by mass relative to 100 parts by mass of the aliphatic carboxylic acid (a) having 2 to 25 carbon atoms.

Mixing the aliphatic carboxylic acid (a) having 2 to 25 carbon atoms, the inorganic acid ester (d), the acid (e), and the metal compound M (f) can be carried out in one step or in plural steps as divided.

One example of the method of mixing the components in plural steps is a production method including the following first step and the second step.

The first step is a step of mixing with heating the aliphatic carboxylic acid (a) having 2 to 25 carbon atoms, the acid (e) and the metal compound M (f) to give a reaction product (h).

The second step is a step of removing water from the reaction system containing the reaction product (h) produced in the first step, then adding the inorganic acid ester (d) to the reaction system from which water has been removed, and reacting the reaction product (h) and the inorganic acid ester (d).

By producing the compound (2) through the above-mentioned two steps, the inorganic acid ester (d) can be prevented from being hydrolyzed by water formed in the first step and the compound (2) can be produced efficiently.

In the production method including the above-mentioned two steps, the temperature in reacting the aliphatic carboxylic acid (a) having 2 to 25 carbon atoms, the inorganic acid ester (d), the acid (e), and the metal compound M (f) is, for example, 100 to 250°C, preferably 150 to 220°C. The reaction time is, for example, 1 to 20 hours, preferably 1 to 5 hours.

The content of the rubber/metal adhesion accelerator in the rubber composition is, from the viewpoint of improving the adhesiveness between vulcanized rubber and metal and improving the durability of the metal/rubber composite and the tire, preferably 1.0 to 5.0 parts by mass relative to 100 parts by mass of the rubber component, more preferably 1.5 to 4.5 parts by mass, even more preferably 1.7 to 4.0 parts by mass.

The metal content in the rubber composition is, from the viewpoint of improving the adhesiveness between vulcanized rubber and metal and improving the durability of the metal/rubber composite and the tire, preferably 15 to 55% by mass, more preferably 23 to 50% by mass, even more preferably 25 to 45% by mass.

[4,4'-Diphenylmethanebismaleimide]

The rubber composition of the present invention contains 4,4'-diphenylmethanebismaleimide.

When the rubber composition does not contain 4,4'-diphenylmethanebismaleimide, vulcanized rubber excellent in adhesiveness to metal could not be given, and the rubber/metal composite and the tire could not be excellent in durability. In addition, when the rubber composition does not contain 4,4'-diphenylmethanebismaleimide, metal corrosion after uncured aging progresses and the rubber/metal adhesiveness worsens.

The content of 4,4'-diphenylmethanebismaleimide in the rubber composition is preferably 0.3 to 2.0 parts by mass relative to 100 parts by mass of the rubber component, more preferably 0.3 to 1.5 parts by mass, even more preferably 0.5 to 1.0 part by mass.

The rubber composition of the present invention preferably contains at least one (referred to as a component B) selected from the group consisting of hexamethylenebisthiosulfate disodium dihydrate, 1,3-bis(citraconimidemethyl)benzene, and 3-hydroxy-N'-(1,3-dimethylbutyhdene)-2-naphthoic acid hydrazide.

When the rubber composition contains one or two or all of hexamethylenebisthiosulfate disodium dihydrate, 1,3-bis(citraconimidemethyl)benzene, and 3-hydroxy-N'-(1,3-dimethylbutyhdene)-2-naphthoic acid hydrazide, the rubber/metal adhesiveness improves more and the durability of the rubber/metal composite and the tire improves more.

Preferably, the component B contains at least hexamethylenebisthiosulfate disodium dihydrate.

The content of the component B in the rubber composition is preferably 0.3 to 5.0 parts by mass relative to 100 parts by mass of the rubber component, more preferably 0.5 to 3.0 parts by mass, even more preferably 1.0 to 2.0 parts by mass.

[Cobalt-containing Material]

The rubber composition of the present invention may contain or may not contain a cobalt-containing material.

Examples of cobalt salts of organic acids include cobalt naphthenate, cobalt stearate, cobalt neodecanoate, cobalt resinate, cobalt versatate, tall-oil-acid cobalt, cobalt oelate, cobalt linoleate, cobalt linolenate, and cobalt palmitate. Examples of cobalt metal complex include cobalt acetylacetonate.

As described above, heretofore, a cobalt-containing material is used to attain an effect of rubber-metal adhesiveness, but the rubber composition of the present invention contains a rubber-metal adhesion accelerator containing bismuth or the like and is therefore excellent in rubber/metal adhesion though not containing a cobalt-containing material. In addition, the rubber composition does not contain a cobalt-containing material and can therefore prevent metal corrosion after uncured aging and can reduce environmental load.

Specifically, the cobalt atom content in the rubber composition of the present invention is preferably 1% by

mass or less, more preferably 0.5% by mass or less, even more preferably 0.01% by mass or less, further more preferably 0% by mass.

Further, the cobalt element content in the rubber component is preferably 1% by mass or less, more preferably 0.5% by mass or less, even more preferably 0.01% by mass or less, further more preferably 0% by mass.

[Filler]

The rubber composition of the present invention preferably contains a filler. When the rubber composition of the present invention contains a filler, the reinforcing property of the vulcanized rubber obtained from the rubber composition of the present invention can improve and the durability of the rubber/metal composite and the tire can improve.

The kind of the filler is not specifically limited, and for example, a reinforcing filler that reinforces the rubber composition is used. Examples of the reinforcing filler include metal oxides such as silica, alumina, titania and zirconia, and aluminum hydroxide and carbon black.

One kind alone or two or more kinds of fillers can be used.

From the viewpoint of improving the reinforcing property of vulcanized rubber and improving the durability of the rubber/metal composite and the tire, the filler preferably contains at least one selected from the group consisting of carbon black and silica.

(Carbon Black)

Not specifically limited, carbon black can be appropriately selected depending on the intended use. For example, carbon black is preferably an FEF, SRF, HAF, ISAF or SAF-grade, more preferably an HAF, ISAF or SAF-grade, even more preferably an HAF-grade.

The carbon black content in the rubber composition is preferably 30 parts by mass or more relative to 100 parts by mass of the rubber component, more preferably 40 parts by mass or more, even more preferably 50 parts by mass or more, and is preferably 90 parts by mass or less, more preferably 80 parts by mass or less, even more preferably 70 parts by mass or less.

When the filler content in the rubber composition is 30 parts by mass or more relative to 100 parts by mass of the rubber component, the reinforcing property of vulcanized rubber is excellent, and when the filler content is 90 parts by mass or less, hysteresis caused by rubbing of filler materials can be reduced more.

(Silica)

Examples of silica include wet-process silica (hydrous silicic acid), dry-process silica (anhydrous silicic acid), colloidal silica, calcium silicate, and aluminum silicate. Among these, wet-process silica is preferably used. One alone or two or more kinds of silica can be used either singly or as combined. The silica content is preferably 1.0 to 10 parts by mass relative to 100 parts by mass of the rubber component, more preferably 2.0 to 9.0 parts by mass, even more preferably 4.0 to 8.0 parts by mass.

[Sulfur]

The rubber composition of the present invention preferably contain sulfur.

Sulfur is not specifically limited, and examples thereof include powdery sulfur, precipitated sulfur, colloidal sulfur, surface-treated sulfur, and insoluble sulfur.

The sulfur content in the rubber composition is, from the viewpoint of more improving the rubber/metal adhesiveness and more improving the durability of the durability of the rubber/metal composite and the tire, preferably 2 to 10 parts by mass relative to 100 parts by mass of the rubber component, more preferably 3 to 9 parts by mass, even more preferably 4 to 8 parts by mass.

[Vulcanization Accelerator]

The rubber composition of the present invention may contain a vulcanization accelerator for more accelerating vulcanization of the rubber component.

Specifically, examples thereof include thiuram-based, guanidine-based, aldehyde/amine-based, aldehyde/ammonia-based, thiazole-based, sulfenamide-based, thiourea-based, dithiocarbamate-based, and xanthate-based vulcanization accelerators. One alone or two or more kinds of vulcanization accelerators can be used.

The vulcanization accelerator content in the rubber composition is, from the viewpoint of more improving the rubber/metal adhesiveness and more improving the durability of the rubber/metal composite and the tire, preferably 0.1

to 5 parts by mass relative to 100 parts by mass of the rubber component, more preferably 0.3 to 4 parts by mass, even more preferably 0.5 to 3 parts by mass.

Along with the rubber component, the rubber/metal adhesion accelerator, 4,4'-diphenylmethanebismaleimide, the filler and sulfur therein and as needed, the rubber composition of the present invention may optionally contain any other compounding agents that are generally used in the rubber industrial field in addition to hexamethylenebisthiosulfate disodium dihydrate and 1,3-bis(citraconimidemethyl)benzene, for example, a softener, stearic acid, an antioxidant, zinc oxide, a silane coupling agent, a resin, a wax and an oil, as appropriately selected within a range not detracting from the object of the present invention.

[Preparation of Rubber Composition]

The rubber composition of the present invention can be produced by blending the above-mentioned components and kneading them using a kneading machine such as a Banbury mixer, a roll or an internal mixer.

Here, the blending amount of each component is the same as the amount mentioned hereinabove as the content in the rubber composition.

Kneading the components can be carried out all in one stage or in two or more stages as divided. For example, in the case of kneading in two stages, the maximum temperature in the first kneading stage is preferably 130 to 160°C, and the maximum temperature in the second stage is preferably 90 to 120°C.

The rubber composition of the present invention is preferably used as a rubber composition for covering metal cords such as typically steel cords.

<Rubber/Metal Composite>

The rubber/metal composite of the present invention contains a vulcanized rubber of the rubber composition of the present invention and a metal.

By covering a metal with the rubber composition of the present invention and vulcanizing the rubber composition, a rubber/metal composite in which the metal is covered with a vulcanized rubber can be obtained. The rubber composition of the present invention may cover at least a part of a metal, but from the viewpoint of improving the durability of the rubber/metal composite, the rubber composition preferably cover the entire surface of a metal.

The metal of the rubber/metal composite is not specifically limited, and includes various metal members such as metal cords and metal plates.

The rubber/metal composite is favorably used as a reinforcing material for use in rubber articles especially required to have strength such as various vehicle tires, conveyor belts and hoses. In particular, the composite is favorably used as a reinforcing member for belts, carcasses and wire chafers of various vehicle radial tires.

For covering a steel cord, for example, the following method is employable.

Preferably, a predetermined number of brass-plated steel cords are aligned in parallel with a predetermined distance therebetween, the steel cords are covered with an uncrosslinked rubber sheet of the rubber composition of the present invention having a thickness of 0.5 mm or so, from both the upper and the lower sides thereof, and this is vulcanized, for example, at a temperature of 160°C or so for 20 minutes or so. In that manner, the resultant composite of the rubber composition and the steel cords has excellent rubber/metal adhesiveness.

The above-mentioned steel cords may be any of steel-made monofilaments and multifilaments (twisted cords or aligned bundle cords), and the shape thereof is not specifically limited. The twist structure of the twisted steel cords is not also specifically limited, and examples thereof include a single twist structure, a double twist structure, a layer twist structure, and a composite twist structure of a double twist structure and a layer twist structure.

The steel cords are, from the viewpoint of favorably securing the adhesiveness to the rubber composition, preferably surface-treated, for example, by surface plating or by treatment with an adhesive.

The surfaces of steel filaments may be plated. The kind of plating is not specifically limited, and examples thereof include zinc (Zn) plating, copper (Cu) plating, tin (Sn) plating, brass (copper-zinc (Cu-Zn)) plating, and bronze (coppertin (Cu-Sn)) plating, as well as ternary plating such as copper-zinc-tin (Cu-Zn-Sn) plating and copper-zinc-cobalt (Cu-Zn-Co) plating. Among these, brass plating and copper-zinc-cobalt ternary plating are preferred.

In addition, also usable are steel filaments in which, for example, the surface N atom accounts for 2 atomic % or more and 60 atomic % or less and the surface Cu/Zn ratio is 1 or more and 4 or less. The metal filament 1 includes a case where the amount of phosphorus contained as an oxide therein up to a filament outermost layer 5 nm inwardly in the filament radius direction is 7.0 atomic % or less as a proportion of the entire amount excluding the C amount.

In the case of using adhesive treatment, for example, adhesive treatment with "Chemlock" (registered trademark), a trade name by Lord Corporation is preferred.

The rubber composition of the present invention can prevent metal corrosion even when a predetermined period of time elapses after coating with metal, and therefore, for example, products can be distributed in a state of covering

the rubber composition with metal cords, and vulcanization can be carried out at the distribution destination to produce rubber/metal composites. The rubber/metal composites produced in that manner are prevented from metal corrosion and hardly lose rubber-metal adhesiveness, and are therefore excellent in durability.

<Tire>

The tire of the present invention contains the rubber/metal composite of the present invention.

The tire of the present invention is excellent in durability since the tire of the present invention contains the rubber/metal composite of the present invention.

The production method for the tire of the present invention is not specifically limited so far as the method can produce a tire so as to include the rubber/metal composite of the present invention.

In general, a rubber composition containing various components is worked into various members in an unvulcanized stage, then the members are stuck and shaped according to an ordinary method on a tire-forming machine to form a green tire. The green tire is heated and pressurized in a vulcanizer to produce a tire. For example, the rubber composition of the present invention is kneaded, the resultant rubber composition is spread over steel cords to layer an unvulcanized belt layer, an unvulcanized carcass and other unvulcanized members, and the resultant unvulcanized laminate is vulcanized to give a tire.

As the gas to fill the tire, usable are ordinary air, oxygen partial pressure-controlled air, as well as an inert gas such as nitrogen, argon, and helium.

<Conveyor Belt, Hose and Crawler>

The conveyor belt of the present invention contains the rubber/metal composite of the present invention.

The hose of the present invention contains the rubber/metal composite of the present invention.

The crawler of the present invention contains the rubber/metal composite of the present invention.

The conveyor belt, the hose and the crawler of the present invention contain the rubber/metal composite excellent in durability and rubber/metal adhesiveness, and are therefore excellent in durability. Methods for producing the conveyor belt, the hose and the crawler of the present invention are not specifically limited.

Examples

<Examples 1 to 25, Comparative Examples 1 to 22>

[Preparation of Rubber Composition]

According to the blending formulation shown in Tables 2 to 10, constituent components were kneaded to prepare rubber compositions. In Tables 2 to 10, blank portions mean that the numerical value is 0. Details of the components shown in Tables 2 to 10 are as follows.

Natural rubber: RSS#3
CB1: carbon black, by Tokai Carbon Co., Ltd., trade name "Seast SO"
CB2: carbon black, by Tokai Carbon Co., Ltd., trade name "Seast 300"
CB3: carbon black, by Tokai Carbon Co., Ltd., trade name "Seast 600"
Silica: by Tosoh Silica Corporation, trade name "Nipsil VN3"
Coupling agent: by Evonik Degussa Japan, trade name "Si-69"
Vulcanization accelerator DCBS: by Ouchi Shinko Chemical Industry Co., Ltd., trade name: "Nocceler-DZ"
Vulcanization accelerator CBS: by Ouchi Shinko Chemical Industry Co., Ltd., trade name: "Nocceler-CZ"
Vulcanization accelerator TBSI: by Ouchi Shinko Chemical Industry Co., Ltd., trade name: "Nocceler-NS"

BMI: by Otsuka Chemical Co., Ltd., 4,4'-bismaleimidediphenylmethane
Hexamethylenebisthiosulfate disodium dihydrate: by Eastman Corporation, trade name "DuralinK-HTS"
1,3-Bis(citraconimidemethyl)benzene: by Lanxess Japan, trade name "Perkalink-900"
3-Hydroxy-N'-(1,3-dimethylbutyhdene)-2-naphthoic acid hydrazide: by Otsuka Chemical Co., Ltd., BMH
Resorcinol resin: by Taoka Chemical Co., Ltd., trade name "Sumikanol 620" Methylene donor compound (HMMMM): by Cytec Industries, Inc., trade name "CYREZ964"

Co neodecanoate: cobalt neodecanoate, structure of the following (i), molecular weight 401.5
Bi neodecanoate: bismuth neodecanoate, structure of the following (iii), molecular weight 722.8, metal carboxylate (1) where the metal species is bismuth

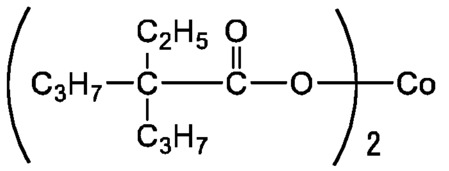

(i)

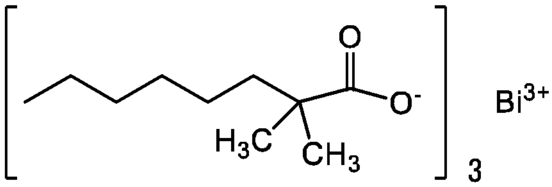

(iii)

<Production of Rubber/Metal Composite>

Steel cords (1×5×0.25 mm (strand diameter)) plated with brass (Cu: 63 % by mass, Zn: 37 % by mass) were arranged in parallel at 12.5 mm intervals and coated with the prepared rubber composition to give an unvulcanized rubber/metal composite precursor (unvulcanized steel cord topping roll) having a thickness of 5 mm. Rapidly after that, the rubber/metal composite precursor was vulcanized at 145°C for 40 minutes to produce a vulcanized rubber-containing rubber/metal composite (ordinary composite).

In [4] Rubber/metal adhesiveness evaluation for adhesion after uncured aging to be mentioned hereinunder, rubber/metal composite samples for evaluation were prepared as follows.

After a rubber/metal composite precursor having a thickness of 5 mm (unvulcanized steel cord topping roll) was prepared, the rubber/metal composite precursor (unvulcanized steel cord topping roll) was left in an environment at a temperature of 40°C and a humidity of 80% for 1 week, and then the rubber/metal composite precursor was vulcanized under the condition of 145°C for 140 minutes to produce a vulcanized rubber-containing rubber/metal composite (composite for uncured aging evaluation).

[Evaluation]

The samples were evaluated according to the methods shown in Table 1.

Table 1

| Evaluation Item | | Sampling Condition | Measurement Condition |
|---|---|---|---|
| Rubber/Metal Adhesiveness | Initial Adhesion Index (97≤data≤110, the greater, the better) | The steel cord topping roll and each rubber were stuck together to give a composite having a thickness of 5 mm, and vulcanized at 145°C for 40 minutes. | Three cords were pulled out in an atmosphere of -65±5°C, and the adhesion force was measured. |
| | Wet Heat Adhesion Index (105≤data, the greater, the better) | The steel cord topping roll and each rubber were stuck together to give a composite having a thickness of 5 mm, and vulcanized at 145°C for 40 minutes, and this was aged at 75°C and 95% RH. | Three cords were pulled out in an atmosphere of -65±5°C, and the adhesion force was measured. |
| | Thermal Degradation Adhesion Index (97≤data, the greater, the better) | The steel cord topping roll and each rubber were stuck together to give a composite having a thickness of 5 mm, and vulcanized at 145°C for 40 minutes, and this was aged at 100°C for 60 days under a nitrogen partial pressure of 0.1 MPa. (in the case where the atmospheric pressure was 0.1 MPa) | Three cords were pulled out in an atmosphere of -65±5°C, and the adhesion force was measured. |
| | After Uncured aging Adhesion Index (97≤data, the greater, the better) | The steel cord topping roll was left standing at 40°C and 80% RH for 7 days, and then stuck to each rubber to give a composite having a thickness of 5 mm, and this was vulcanized at 145°C for 40 minutes. | Three cords were pulled out in an atmosphere of -65±5°C, and the adhesion force was measured. |
| Durability | Rubber Degradation Resistance Index (97≤data, the greater, the better) | Each rubber composition was shaped into a sheet (2 ± 0.3 mm thick, 15 cm×15 cm) and vulcanized at 145°C for 40 minutes, and the vulcanized product was degraded at 70°C for 3 days under an oxygen partial pressure of 0.5 MPa (in the case where the atmospheric pressure was 0.1 MPa), and then punched to give JIS#3 pieces. | Using Strograph AP3 by Toyo Seiki Kogyo Co., Ltd., each sample was tested for tensile strength (500 mm/min) at 100°C. In the tensile test, the elongation at break × strength at break was measured. |
| | 5% Elastic Modulus Index (97≤data, the greater, the better = the harder) | Each rubber composition was shaped into a sheet (2 ± 0.3 mm thick, 15 cm×15 cm) and vulcanized at 145°C for 40 minutes, and the vulcanized product was punched to give rectangular samples. | Using Spectrometer by Toyo Seiki Kogyo Co., Ltd., under an atmosphere of 100°C, E' (storage elastic modulus) of each sample was measured at a one-side tensile strain of 5% (10% in total) and given a vibration of 10 Hz.. |
| | 5%tanδ Index (103≥data, the smaller, the better = the smaller heat generation) | Each rubber composition was shaped into a sheet (2 ± 0.3 mm thick, 15 cm×15 cm) and vulcanized at 145°C for 40 minutes, and the vulcanized product was punched to give rectangular samples. | Using Spectrometer by Toyo Seiki Kogyo Co., Ltd., under an atmosphere of 100°C, E" (loss elastic modulus)/E' of each sample was measured at a one-side tensile strain of 5% (10% in total) and given a vibration of 10 Hz.. |

Specifically, the tests are as follows.

1. Rubber/Metal Adhesiveness

The rubber/metal adhesiveness was evaluated in four adhesion states of [1] initial adhesion, [2] wet heat adhesion, [3] heat adhesion, and [4] adhesion after uncured aging.
In [1] initial adhesion evaluation and [4] adhesion evaluation after uncured aging, steel cords were pulled out from the produced rubber/metal composite (ordinary composite, and composite for evaluation after uncured aging) in an atmosphere of -65±5°C.
In [2] wet heat adhesion evaluation, the produced rubber/metal composite (ordinary composite) was degraded at 75°C and 95% RH, and then steel cords were pulled out from the rubber/metal composite in an atmosphere of -65±5°C.
In [3] heat adhesion evaluation, the produced rubber/metal composite (ordinary composite) was degraded in an environment at 100°C for 60 days under a nitrogen partial pressure of 0.1 MPa (in the case where the atmospheric pressure was 0.1 MPa), and then steel cords were pulled out from the rubber/metal composite in an atmosphere of -65±5°C.

2. Durability

Durability of the rubber/metal composite was evaluated from the viewpoint of the elastic modulus and the tensile characteristics of vulcanized rubber.

(Rubber Degradation Resistance Index)

Vulcanized rubber was cut out of the rubber/metal composite used in [4] adhesion evaluation after uncured aging for rubber/metal adhesiveness evaluation, and the elongation at break (EB) (unit: %) and the tensile strength (TB) (unit: MPa) of the resultant vulcanized rubber were measured. A value calculated by multiplying the resultant EB and TB was converted into an index EB×TB of Examples and Comparative Examples, assuming that a value EB×TB of Comparative Example 1 was an index 100. A larger index EB×TB means that the rubber/metal composite is more excellent in durability.
The elongation at break (EB) (unit: %) and the tensile strength (TB) (unit: MPa) were determined as follows.

$$\text{Elongation at break (EB) (unit: \%)} \times \text{tensile strength (TB) (unit: MPa)}$$

Each rubber composition was shaped into a sheet (2 ± 0.3 mm thick, 15 cm × 15 cm), and then vulcanized at 145°C for 40 minutes. The resultant vulcanized product was aged at 70°C for 3 days under an oxygen partial pressure of 0.5 MPa (in the case where the atmospheric pressure was 0.1 MPa). Subsequently, the sample was punched to give JIS#3 pieces. Using Strograph AP3 by Toyo Seiki Kogyo Co., Ltd., each sample was tested for tensile strength under the condition of 500 mm/min at 100°C, and elongation at break ×strength at break was calculated. The results of Examples and Comparative Examples were expressed as exponent notation based on the result in Comparative Example 5 as 100.

(Rubber Elastic Modulus, tanδ)

Rectangular vulcanized rubber pieces were cut out of the rubber/metal composite (ordinary composite) used in [1] initial adhesion evaluation for rubber/metal adhesiveness evaluation. The dynamic elastic modulus (E') and tanδ of the resultant rectangular vulcanized rubber piece was measured, using a viscoelasticity measuring device, Spectrometer by Toyo Seiki Kogyo Co., Ltd. Regarding the measurement condition, the sample was given a sine wave at a one-side tensile strain 5%, at a temperature 100°C and a frequency 15 Hz.
The dynamic elastic modulus (E') and the tanδ of Comparative Example 5 each were expressed as 100, and the dynamic elastic modulus (E') and tan δ of Examples and Comparative Examples were expressed as indices. A larger index value means that the rubber/metal composite is more excellent in durability.
The results are shown in Tables 2 to 10.

Table 2

| | | | Example 1 | Example 2 | Example 3 | Example 4 | Example 5 | Example 6 |
|---|---|---|---|---|---|---|---|---|
| Rubber Formulation | Natural rubber | Part | 100 | 100 | 100 | 100 | 100 | 100 |
| | CB2 | Part | 60 | 60 | 60 | 60 | 60 | 60 |
| | CB1 | Part | | | | | | |
| | CB3 | Part | | | | | | |
| | Zinc oxide | Part | 10 | 10 | 10 | 10 | 10 | 10 |
| | Bi neodecanoate | Part | 2.18 | 2.72 | 4.90 | 5.44 | 4.08 | 2.72 |
| | Antioxidant | Part | 1 | 1 | 1 | 1 | 1 | 1 |
| | Sulfur | Part | 6.0 | 6.0 | 6.0 | 6.0 | 6.0 | 6.0 |
| | BMI | Part | 1.0 | 1.0 | 1.0 | 1.0 | 1.0 | 1.0 |
| | Vulcanization accelerator DCBS | Part | | | | | | |
| | Vulcanization accelerator CBS | Part | 0.90 | 0.90 | 0.90 | 0.90 | 0.90 | |
| | Vulcanization accelerator TBSI | Part | | | | | | 1.0 |
| | 3-Hydroxy-N'-(1,3-dimethylbutyhdene)-2-naphthoic acid hydrazide | Part | | | | | | |
| | Hexamethylenebisthiosulfate disodium dihydrate | Part | | | | | | |
| | 1,3-Biscitraconimidemethylbenzene | Part | | | | | | |

(continued)

| | | Example 1 | Example 2 | Example 3 | Example 4 | Example 5 | Example 6 |
|---|---|---|---|---|---|---|---|
| Properties | Initial Adhesion Index (97≤data≤110, the greater, the better) | 97 | 104 | 107 | 110 | 110 | 104 |
| | Wet Heat Adhesion Index (105≤data, the greater, the better) | 126 | 131 | 134 | 139 | 138 | 123 |
| | Thermal Degradation Adhesion Index (90≤data, the greater, the better) | 105 | 100 | 100 | 92 | 90 | 105 |
| | After Uncured aging Adhesion Index (97≤data, the greater, the better) | 98 | 108 | 111 | 112 | 113 | 100 |
| | Rubber Degradation Resistance Index (97≤data, the greater, the better) | 123 | 118 | 115 | 107 | 102 | 110 |
| | 5% Elastic Modulus Index (97≤data, the greater, the better = the harder) | 115 | 115 | 117 | 117 | 120 | 115 |
| | 5%tanδ Index (103≥data, the smaller, the better = the smaller heat generation) | 83 | 85 | 88 | 90 | 92 | 85 |

Table 3

| | | | Example 7 | Example 8 | Example 9 | Example 10 | Example 11 | Example 12 |
|---|---|---|---|---|---|---|---|---|
| Rubber Formulation | Natural rubber | Part | 100 | 100 | 100 | 100 | 100 | 100 |
| | CB2 | Part | 60 | 60 | 63 | 60 | 60 | 60 |
| | CB1 | Part | | | | | | |
| | CB3 | Part | | | | | | |
| | Zinc oxide | Part | 10 | 10 | 10 | 10 | 7 | 7 |
| | Bi neodecanoate | Part | 2.72 | 2.72 | 2.72 | 2.72 | 2.72 | 2.72 |
| | Antioxidant | Part | 1 | 1 | 1 | 1 | 1 | 1 |
| | Sulfur | Part | 6.0 | 6.0 | 6.0 | 7.0 | 6.0 | 5.5 |
| | BMI | Part | 1.0 | 0.5 | 0.5 | 1.0 | 1.0 | 1.0 |
| | Vulcanization accelerator DCBS | Part | 1.3 | | | | | |
| | Vulcanization accelerator CBS | Part | | 0.90 | 0.90 | 0.90 | 0.90 | 0.90 |
| | Vulcanization accelerator TBSI | Part | | | | | | |
| | 3-Hydroxy-N'-(1,3-dimethylbutyhdene)-2-naphthoic acid hydrazide | Part | | | | | | |
| | Hexamethylenebisthiosulfate disodium dihydrate | Part | | | | | | |
| | 1,3-Biscitraconimidemethylbenzen e | Part | | | | | | |

(continued)

| | | Example 7 | Example 8 | Example 9 | Example 10 | Example 11 | Example 12 |
|---|---|---|---|---|---|---|---|
| Properties | Initial Adhesion Index (97≤data≤110, the greater, the better) | 104 | 104 | 104 | 110 | 100 | 100 |
| | Wet Heat Adhesion Index (105≤data, the greater, the better) | 129 | 130.5 | 131 | 120 | 134 | 136 |
| | Thermal Degradation Adhesion Index (90≤data, the greater, the better) | 103 | 100 | 100 | 107 | 97 | 97 |
| | After Uncured aging Adhesion Index (97≤data, the greater, the better) | 114 | 99 | 100 | 99 | 106 | 109 |
| | Rubber Degradation Resistance Index (97≤data, the greater, the better) | 106 | 119 | 110 | 98 | 123 | 128 |
| | 5% Elastic Modulus Index (97≤data, the greater, the better = the harder) | 115 | 97.5 | 100 | 117 | 115 | 114 |
| | 5%tanδ Index (103≥data, the smaller, the better = the smaller heat generation) | 86 | 83 | 102 | 84 | 85 | 85 |

Table 4

| | | | Example 13 | Example 14 | Example 15 | Example 16 | Example 17 |
|---|---|---|---|---|---|---|---|
| Rubber Formulation | Natural rubber | Part | 100 | 100 | 100 | 100 | 100 |
| | CB2 | Part | 60 | 60 | 60 | 60 | 60 |
| | CB1 | Part | | | | | |
| | CB3 | Part | | | | | |
| | Zinc oxide | Part | 10 | 10 | 10 | 10 | 10 |
| | Bineodecanoate | Part | 2.72 | 2.72 | 2.72 | 2.72 | 2.72 |
| | Antioxidant | Part | 1 | 1 | 1 | 1 | 1 |
| | Sulfur | Part | 6.0 | 6.0 | 5.5 | 6.0 | 5.5 |
| | BMI | Part | 1.0 | 0.5 | 1.0 | 1.0 | 1.0 |
| | Vulcanization accelerator DCBS | Part | | | | | |
| | Vulcanization accelerator CBS | Part | 0.90 | 0.90 | 0.90 | 0.90 | 0.90 |
| | Vulcanization accelerator TBSI | Part | | | | | |
| | 3-Hydroxy-N'-(1,3-dimethylbutylidene)-2-naphthoic acid hydrazide | Part | | | | | 1 |
| | Hexamethylenebisthiosulfate disodium dihydrate | Part | 1 | 1 | 1 | | 1 |
| | 1,3-Biscitraconimidemethylbenzene | Part | | | | 1 | |
| Properties | Initial Adhesion Index (97≤data≤110, the greater, the better) | | 110 | 110 | 106 | 103 | 102 |
| | Wet Heat Adhesion Index (105≤data, the greater, the better) | | 128 | 127.5 | 133 | 137 | 129 |
| | Thermal Degradation Adhesion Index (90≤data, the greater, the better) | | 105 | 105 | 102 | 103 | 97 |
| | After Uncured aging Adhesion Index (97≤data, the greater, the better) | | 106 | 97 | 107 | 105 | 104 |
| | Rubber Degradation Resistance Index (97≤data, the greater, the better) | | 125 | 126 | 135 | 130 | 141 |
| | 5% Elastic Modulus Index (97≤data, the greater, the better = the harder) | | 116 | 98.5 | 115 | 117 | 100 |
| | 5%tanδ Index (103≥data, the smaller, the better = the smaller heat generation) | | 85 | 83 | 85 | 80 | 65 |

Table 5

| | | | Example 18 | Example 19 | Example 20 |
|---|---|---|---|---|---|
| Rubber Formulation | Natural rubber | Part | 100 | 100 | 100 |
| | CB2 | Part | 60 | | |
| | CB1 | Part | | 60 | |
| | CB3 | Part | | | 60 |
| | Zinc oxide | Part | 10 | 10 | 10 |
| | Bi neodecanoate | Part | 2.72 | 2.72 | 2.72 |
| | Antioxidant | Part | 1 | 1 | 1 |
| | Sulfur | Part | 6.0 | 6.0 | 6.0 |
| | BMI | Part | 1.0 | 1.0 | 1.0 |
| | Vulcanization accelerator DCBS | Part | | | |
| | Vulcanization accelerator CBS | Part | 0.90 | 0.90 | 0.90 |
| | Vulcanization accelerator TBSI | Part | | | |
| | 3-Hydroxy-N'-(1,3-dimethylbutylidene)-2-naphthoic acid hydrazide | Part | 1 | | |
| | Hexamethylenebisthiosulfate disodium dihydrate | Part | 1 | | |
| | 1, 3-Biscitraconimidemethylbenzene | Part | | | |
| Properties | Initial Adhesion Index (97≤data≤110, the greater, the better) | | 106 | 105 | 105 |
| | Wet Heat Adhesion Index (105≤data, the greater, the better) | | 124 | 140 | 140 |
| | Thermal Degradation Adhesion Index (90≤data, the greater, the better) | | 100 | 103 | 103 |
| | After Uncured aging Adhesion Index (97≤data, the greater, the better) | | 103 | 105 | 105 |
| | Rubber Degradation Resistance Index (97≤data, the greater, the better) | | 131 | 105 | 125 |
| | 5% Elastic Modulus Index (97≤data, the greater, the better = the harder) | | 101 | 105 | 125 |
| | 5%tanδ Index (103≥data, the smaller, the better = the smaller heat generation) | | 65 | 70 | 97 |

Table 6

| | | | Example 21 | Example 22 | Example 23 | Example 24 | Example 25 |
|---|---|---|---|---|---|---|---|
| Rubber Formulation | Natural rubber | Part | 100 | 100 | 100 | 100 | 100 |
| | CB2 | Part | 56 | 58 | 56 | 58 | 53 |
| | Silica | Part | 8 | 4 | 8 | 4 | 8 |
| | Coupling agent | Part | | | 0.8 | 0.4 | |
| | zinc oxide | Part | 10 | 10 | 10 | 10 | 10 |
| | Resorcinol resin | Part | | | | | 2 |
| | Bi neodecanoate | Part | 2.72 | 2.72 | 2.72 | 2.72 | 2.72 |
| | Antioxidant | Part | 1 | 1 | 1 | 1 | 1 |
| | ¥sulfur | Part | 6 | 6 | 6 | 6 | 6 |
| | BMI | Part | 1 | 1 | 1 | 1 | 1 |
| | Vulcanization accelerator DCBS | Part | | | | | |
| | Vulcanization accelerator CBS | Part | 1 | 1 | 0.95 | 0.95 | 0.9 |
| | Methylene donor compound | Part | | | | | 3 |
| Properties | Initial Adhesion Index (97≤data≤110, the greater, the better) | | 106 | 104 | 103 | 100 | 100 |
| | Wet Heat Adhesion Index (105≤data, the greater, the better) | | 126 | 129 | 137 | 140 | 150 |
| | Thermal Degradation Adhesion Index (90≤data, the greater, the better) | | 110 | 105 | 100 | 102 | 100 |
| | After Uncured aging Adhesion Index (97≤data, the greater, the better) | | 103 | 105 | 103 | 105 | 105 |
| | Rubber Degradation Resistance Index (97≤data, the greater, the better) | | 127 | 123 | 117 | 120 | 125 |
| | 5% Elastic Modulus Index (97≤data, the greater, the better = the harder) | | 113 | 114 | 115 | 113 | 115 |
| | 5%tanδ Index (103≥data, the smaller, the better = the smaller heat generation) | | 90 | 87 | 85 | 82 | 80 |

Table 7

| | | | Comparative Example 1 | Comparative Example 2 | Comparative Example 3 | Comparative Example 4 | Comparative Example 5 | Comparative Example 6 |
|---|---|---|---|---|---|---|---|---|
| Rubber Formulation | Natural rubber | Part | 100 | 100 | 100 | 100 | 100 | 100 |
| | CB2 | Part | 60 | 60 | 60 | 60 | 60 | 60 |
| | Zinc oxide | Part | 10 | 10 | 10 | 10 | 10 | 10 |
| | Co neodecanoate | Part | 0 | 0.7 | 0.98 | 1.12 | 1.4 | 2.1 |
| | Bi neodecanoate | Part | | | | | | |
| | Metal content | % | 14.2 | 14.2 | 14.2 | 14.2 | 14.2 | 14.2 |
| | Metal content (*100) | - | 0 | 9.94 | 13.92 | 15.90 | 19.88 | 29.82 |
| | Metal molecular weight | - | 58.9 | 58.9 | 58.9 | 58.9 | 58.9 | 58.9 |
| | Metal | mol % | 0 | 16.9 | 23.6 | 27.0 | 33.7 | 50.6 |
| | Fatty acid amount | Part | 0.00 | 0.60 | 0.84 | 0.96 | 1.20 | 1.80 |
| | Antioxidant | Part | 1 | 1 | 1 | 1 | 1 | 1 |
| | Sulfur | Part | 6 | 6 | 6 | 6 | 6 | 6 |
| | BMI | Part | | | | | | |
| | Vulcanization accelerator DCBS | Part | 1 | 1 | 1 | 1 | 1 | 1 |
| | Vulcanization accelerator CBS | Part | | | | | | |
| | Vulcanization accelerator TBSI | Part | | | | | | |
| | Each metal ratio | - | 0 | 0.5 | 0.7 | 0.8 | 1 | 1.5 |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Properties | Initial Adhesion Index (97≤data≤110, the greater, the better) | 10 | 65 | 87 | 93 | 100 | 103 |
| | Wet Heat Adhesion Index (105≤data, the greater, the better) | 10 | 30 | 50 | 90 | 100 | 103 |
| | Thermal Degradation Adhesion Index (90≤data, the greater, the better) | 25 | 60 | 87 | 100 | 100 | 100 |
| | After Uncured aging Adhesion Index (97≤data, the greater, the better) | 15 | 65 | 72 | 90 | 100 | 103 |
| | Rubber Degradation Resistance Index (97≤data, the greater, the better) | 130 | 120 | 110 | 105 | 100 | 95 |
| | 5% Elastic Modulus Index (97≤data, the greater, the better = the harder) | 65 | 72 | 80 | 90 | 100 | 105 |
| | 5%tanδ Index (103≥data, the smaller, the better = the smaller heat generation) | 75 | 87 | 93 | 97 | 100 | 103 |

Table 8

| | | | Comparative Example 7 | Comparative Example 8 | Comparative Example 9 | Comparative Example 10 | Comparative Example 11 | Comparative Example 12 |
|---|---|---|---|---|---|---|---|---|
| Rubber Formulation | Natural rubber | Part | 100 | 100 | 100 | 100 | 100 | 100 |
| | CB2 | Part | 60 | 60 | 60 | 60 | 60 | 60 |
| | Zinc oxide | Part | 10 | 10 | 10 | 10 | 10 | 10 |
| | Co neodecanoate | Part | 2.8 | 3.5 | 4.2 | 0.98 | 1.4 | 0.98 |
| | Bi neodecanoate | Part | | | | | | |
| | Metal content | % | 14.2 | 14.2 | 14.2 | 14.2 | 14.2 | 14.2 |
| | Metal content (*100) | - | 39.76 | 49.70 | 59.64 | 13.92 | 19.88 | 13.92 |
| | Metal molecular weight | - | 58.9 | 58.9 | 58.9 | 58.9 | 58.9 | 58.9 |
| | Metal | mol % | 67.5 | 84.3 | 101.2 | 23.6 | 33.7 | 23.6 |
| | Fatty acid amount | Part | 2.40 | 3.00 | 3.60 | 0.84 | 1.20 | 0.84 |
| | Antioxidant | Part | 1 | 1 | 1 | 1 | 1 | 1 |
| | Sulfur | Part | 6 | 6 | 6 | 6 | 6 | 6 |
| | BMI | Part | | | | | | |
| | Vulcanization accelerator DCBS | Part | 1 | 1 | 1 | 1.3 | 1.3 | |
| | Vulcanization accelerator CBS | Part | | | | | | 0.9 |
| | Vulcanization accelerator TBSI | Part | | | | | | |
| | Each metal ratio | - | 2 | 2.5 | 3 | 0.7 | 1 | 0.7 |

(continued)

| | | Comparative Example 7 | Comparative Example 8 | Comparative Example 9 | Comparative Example 10 | Comparative Example 11 | Comparative Example 12 |
|---|---|---|---|---|---|---|---|
| Properties | Initial Adhesion Index (97≤data≤110, the greater, the better) | 107 | 110 | 115 | 97 | 110 | 97 |
| | Wet Heat Adhesion Index (105≤data, the greater, the better) | 105 | 100 | 95 | 80 | 95 | 80 |
| | Thermal Degradation Adhesion Index (90≤data, the greater, the better) | 98 | 94 | 88 | 110 | 103 | 107 |
| | After Uncured aging Adhesion Index (97≤data, the greater, the better) | 105 | 100 | 95 | 85 | 104 | 77 |
| | Rubber Degradation Resistance Index (97≤data, the greater, the better) | 90 | 80 | 60 | 103 | 98 | 118 |
| | 5% Elastic Modulus Index (97≤data, the greater, the better = the harder) | 110 | 120 | 125 | 80 | 100 | 80 |
| | 5%tanδ Index (103≥data, the smaller, the better = the smaller heat generation) | 110 | 115 | 121 | 94 | 101 | 93 |

Table 9

| | | | Comparative Example 13 | Comparative Example 14 | Comparative Example 15 | Comparative Example 16 | Comparative Example 17 | Comparative Example 18 |
|---|---|---|---|---|---|---|---|---|
| Rubber Formulation | Natural rubber | Part | 100 | 100 | 100 | 100 | 100 | 100 |
| | CB2 | Part | 60 | 60 | 60 | 60 | 60 | 60 |
| | Zinc oxide | Part | 10 | 10 | 10 | 10 | 10 | 10 |
| | Co neodecanoate | Part | 1.12 | 1.4 | 2.1 | 2.8 | 3.5 | 4.2 |
| | Bi neodecanoate | Part | | | | | | |
| | Metal content | % | 14.2 | 14.2 | 14.2 | 14.2 | 14.2 | 14.2 |
| | Metal content (*100) | - | 15.90 | 19.88 | 29.82 | 39.76 | 49.70 | 59.64 |
| | Metal molecular weight | - | 58.9 | 58.9 | 58.9 | 58.9 | 58.9 | 58.9 |
| | Metal | mol % | 27.0 | 33.7 | 50.6 | 67.5 | 84.3 | 101.2 |
| | Fatty acid amount | Part | 0.96 | 1.20 | 1.80 | 2.40 | 3.00 | 3.60 |
| | Antioxidant | Part | 1 | 1 | 1 | 1 | 1 | 1 |
| | Sulfur | Part | 6 | 6 | 6 | 6 | 6 | 6 |
| | BMI | Part | | | | | | |
| | Vulcanization accelerator DCBS | Part | | | | | | |
| | Vulcanization accelerator CBS | Part | 0.9 | 0.9 | 0.9 | 0.9 | 0.9 | 0.9 |
| | Vulcanization accelerator TBSI | Part | | | | | | |
| | Each metal ratio | - | 0.8 | 1 | 1.5 | 2 | 2.5 | 3 |

(continued)

| | | Comparative Example 13 | Comparative Example 14 | Comparative Example 15 | Comparative Example 16 | Comparative Example 17 | Comparative Example 18 |
|---|---|---|---|---|---|---|---|
| Properties | Initial Adhesion Index (97≤data≤110, the greater, the better) | 103 | 110 | 113 | 117 | 120 | 125 |
| | Wet Heat Adhesion Index (105≤data, the greater, the better) | 87 | 97 | 100 | 100 | 95 | 90 |
| | Thermal Degradation Adhesion Index (90≤data, the greater, the better) | 105 | 100 | 97 | 90 | 85 | 78 |
| | After Uncured aging Adhesion Index (97≤data, the greater, the better) | 87 | 97 | 100 | 102 | 97 | 92 |
| | Rubber Degradation Resistance Index (97≤data, the greater, the better) | 115 | 110 | 105 | 100 | 90 | 70 |
| | 5% Elastic Modulus Index (97≤data, the greater, the better = the harder) | 90 | 100 | 105 | 110 | 120 | 125 |
| | 5%tanδ Index (103≥data, the smaller, the better = the smaller heat generation) | 97 | 100 | 103 | 110 | 115 | 121 |

Table 10

| | | | Comparative Example 19 | Comparative Example 20 | Comparative Example 21 | Comparative Example 22 |
|---|---|---|---|---|---|---|
| Rubber Formulation | Natural rubber | Part | 100 | 100 | 100 | 100 |
| | CB2 | Part | 60 | 60 | 60 | 60 |
| | Zinc oxide | Part | 10 | 10 | 10 | 10 |
| | Co neodecanoate | Part | | | | |
| | Bi neodecanoate | Part | 2.176 | 2.72 | 4.08 | 5.44 |
| | Metal content | % | 25.9 | 25.9 | 25.9 | 25.9 |
| | Metal content (*100) | - | 56.36 | 70.4 | 105.7 | 140.9 |
| | Metal molecular weight | - | 209 | 209 | 209 | 209 |
| | Metal | mol % | 27.0 | 33.7 | 50.6 | 67.4 |
| | Fatty acid amount | Part | 1.61 | 2.02 | 3.02 | 4.03 |
| | An tioxidan t | Part | 1 | 1 | 1 | 1 |
| | Sulfur | Part | 6 | 6 | 6 | 6 |
| | BMI | Part | | | | |
| | Vulcanization accelerator DCBS | Part | | | | |
| | Vulcanization accelerator CBS | Part | 0.9 | 0.9 | 0.9 | 0.9 |
| | Vulcanization accelerator TBSI | Part | | | | |
| | Each metal ratio | - | 0.8 | 1 | 1.5 | 2 |

(continued)

| | | Comparative Example 19 | Comparative Example 20 | Comparative Example 21 | Comparative Example 22 |
|---|---|---|---|---|---|
| Properties | Initial Adhesion Index (97≤data≤110, the greater, the better) | 97 | 104 | 107 | 110 |
| | Wet Heat Adhesion Index (105≤data, the greater, the better) | 123 | 130 | 133 | 138 |
| | Thermal Degradation Adhesion Index (90≤data, the greater, the better) | 105 | 100 | 100 | 90 |
| | After Uncured aging Adhesion Index (97≤data, the greater, the better) | 80 | 90 | 93 | 95 |
| | Rubber Degradation Resistance Index (97≤data, the greater, the better) | 125 | 120 | 117 | 110 |
| | 5% Elastic Modulus Index (97≤data, the greater, the better = the harder) | 80 | 80 | 82 | 84 |
| | 5%tanδ Index (103≥data, the smaller, the better = the smaller heat generation) | 78 | 80 | 83 | 85 |

Industrial Applicability

The rubber composition of the present invention is excellent in rubber/metal adhesiveness and can produce a rubber/metal composite excellent in durability, and therefore the rubber/metal composite produced using the rubber composition of the present invention is suitable not only for production of various tires such as heavy load tires, e.g., truck tires and bus tires, and also passenger car tires, but also for production of conveyor belts, hoses and crawlers.

## Claims

**1.** A rubber composition comprising:

a rubber component,
a rubber/metal adhesion accelerator containing at least one selected from the group consisting of (1) a metal carboxylate which has 2 to 25 carbon atoms and in which the metal species is selected from the group consisting of bismuth, copper, antimony, silver, niobium and zirconium; and (2) a compound represented by the following formula (A), and
4,4'-diphenylmethanebismaleimide:

$$[(RCOO)_xMO]_3Z \qquad (A)$$

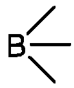 (z-1)

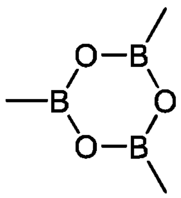 (z-2)

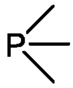 (z-3)

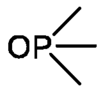 (z-4)

wherein Z is a structure selected from the formulae (z-1) to (z-4), M is bismuth, copper, antimony, silver, niobium or zirconium, (RCOO) is a residue of an aliphatic carboxylic acid having 2 to 25 carbon atoms, and x is an integer of (valency of M - 1).

**2.** The rubber composition according to claim 1, further containing at least one selected from the group consisting of hexamethylenebisthiosulfate disodium dihydrate, 1,3-bis(citraconimidemethyl)benzene, and 3-hydroxy-N'-(1,3-dimethylbutylidene)-2-naphthoic acid hydrazide.

**3.** The rubber composition according to claim 1 or 2, containing a filler that contains at least one selected from the group consisting of carbon black and silica.

**4.** The rubber composition according to any one of claims 1 to 3, wherein the rubber component contains a natural rubber.

**5.** The rubber composition according to any one of claims 1 to 4, wherein the rubber/metal adhesion accelerator contains the metal carboxylate (1) and the metal species of the metal carboxylate (1) is bismuth or copper.

**6.** The rubber composition according to any one of claims 1 to 5, wherein the rubber/metal adhesion accelerator contains the metal carboxylate (1) and the aliphatic carboxylic acid in the metal carboxylate (1) is an aliphatic monocarboxylic acid or an aliphatic dicarboxylic acid.

**7.** The rubber composition according to claim 6, wherein the aliphatic monocarboxylic acid is a saturated aliphatic monocarboxylic acid having 2 to 20 carbon atoms.

**8.** The rubber composition according to claim 7, wherein the saturated aliphatic monocarboxylic acid having 2 to 20 carbon atoms is 2-ethylhexanoic acid, neodecanoic acid, hexadecenoic acid or octadecanoic acid.

**9.** The rubber composition according to any one of claims 1 to 8, wherein the rubber/metal adhesion accelerator contains the compound (2) and M in the compound (2) is bismuth or copper.

**10.** The rubber composition according to any one of claims 1 to 9, wherein the rubber/metal adhesion accelerator contains the compound (2) and Z in the compound (2) is a structure represented by the formula (z-1).

**11.** The rubber composition according to any one of claims 1 to 10, wherein the rubber/metal adhesion accelerator contains the compound (2) and (RCOO) in the compound (2) is a residue of a saturated aliphatic monocarboxylic acid having 2 to 20 carbon atoms.

**12.** The rubber composition according to claim 11, wherein (RCOO) in the compound (2) is a residue of 2-ethylhexanoic acid, a residue of neodecanoic acid, a residue of hexadecenoic acid or a residue of octadecanoic acid.

**13.** A rubber/metal composite containing a vulcanized rubber of the rubber composition of any one of claims 1 to 12 and a metal.

**14.** A tire containing the rubber/metal composite of claim 13.

**15.** A conveyor belt containing the rubber/metal composite of claim 13.

**16.** A hose containing the rubber/metal composite of claim 13.

**17.** A crawler containing the rubber/metal composite of claim 13.

**INTERNATIONAL SEARCH REPORT**

International application No.
PCT/JP2020/036976

A. CLASSIFICATION OF SUBJECT MATTER
B60C 1/00(2006.01)i; B62D 55/24(2006.01)i; C08K 5/098(2006.01)i; C08K 5/25(2006.01)i; C08K 5/3415(2006.01)i; C08K 5/41(2006.01)i; C08L 21/00(2006.01)i; C08K 3/04(2006.01)i; C08K 3/36(2006.01)i; F16L 11/04(2006.01)i
FI: C08L21/00; C08K5/098; C08K5/3415; C08K5/41; C08K5/25; C08K3/04; C08K3/36; B60C1/00 C; B62D55/24; F16L11/04
According to International Patent Classification (IPC) or to both national classification and IPC

B. FIELDS SEARCHED
Minimum documentation searched (classification system followed by classification symbols)
B60C1/00; B62D55/24; C08K5/098; C08K5/25; C08K5/3415; C08K5/41; C08L21/00; C08K3/04; C08K3/36; F16L11/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2016/039375 A1 (DIC CORPORATION) 17 March 2016 (2016-03-17) claims, paragraph [0053], examples | 1-17 |
| Y | JP 2002-205506 A (BRIDGESTONE CORPORATION) 23 July 2002 (2002-07-23) claims, paragraphs [0006], [0014], examples | 1-17 |
| Y | WO 2016/203886 A1 (BRIDGESTONE CORPORATION) 22 December 2016 (2016-12-22) claims, paragraphs [0051]-[0052], [0060]-[0061], examples | 1-17 |
| Y | JP 2002-194139 A (BRIDGESTONE CORPORATION) 10 July 2002 (2002-07-10) paragraphs [0002]-[0004], examples | 1-17 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 November 2020 (20.11.2020) | 08 December 2020 (08.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/036976

| Patent Documents referred in the Report | Publication Date | Patent Family | Publication Date |
|---|---|---|---|
| WO 2016/039375 A1 | 17 Mar. 2016 | US 2017/0253722 A1 claims, paragraph [0063], examples<br>EP 3196243 A1<br>CN 106687518 A<br>KR 10-2017-0056528 A | |
| JP 2002-205506 A | 23 Jul. 2002 | US 2002/0088522 A1 claims, paragraphs [0011], [0028]-[0029], examples<br>EP 1205315 A2 | |
| WO 2016/203886 A1 | 22 Dec. 2016 | (Family: none) | |
| JP 2002-194139 A | 10 Jul. 2002 | US 2002/0077423 A1 paragraphs [0005]-[0007], examples<br>EP 1199331 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016039375 A
- JP 4230397 A
- JP 10502962 T
- WO 2016203886 A